# EUROPÄISCHE PATENTSCHRIFT

(11) **EP 2 743 039 B1**
(45) Veröffentlichungstag und Bekanntmachung des Hinweises auf die Patenterteilung: **06.03.2024**
(21) Anmeldenummer: 13195579.1
(22) Anmeldetag: 03.12.2013
(51) Int. Cl.: B25J 9/04, B25J 9/08, B25J 9/00

(54) **Roboterarm**
Robot arm
Bras de robot

(30) Priorität: 13.12.2012 DE 102012223063
(43) Veröffentlichungstag der Anmeldung: 18.06.2014
(73) Patentinhaber: KUKA Deutschland GmbH, 86165 Augsburg (DE)
(72) Erfinder: Roth, Stefan, 86485 Eisenbrechtshofen (DE)
(74) Vertreter: Böss, Dieter Alexander

(56) Entgegenhaltungen:
- CA-A1- 2 497 250
- DE-A1- 3 026 273
- JP-A- H01 146 676
- JP-A- S62 166 978
- JP-U- H01 149 285

## Beschreibung

Die Erfindung betrifft einen Roboterarm.

Roboterarme umfassen in der Regel mehrere, hintereinander angeordnete und über Gelenke verbundene Glieder und elektrische Motoren zum Bewegen der Glieder relativ zueinander. Bei den Gliedern handelt es sich insbesondere um ein ortsfestes oder bewegliches Gestell und ein relativ zum Gestell um eine erste Drehachse drehbar gelagertes Karussell. Weitere Glieder eines Roboterarms sind beispielsweise eine Schwinge, ein Arm und eine vorzugsweise mehrachsige Roboterhand mit einer z.B. als Flansch ausgeführten Befestigungsvorrichtung zum Befestigen eines Endeffektors. Die Schwinge ist am unteren Ende z.B. an einem Schwingenlagerkopf auf dem Karussell um eine zweite Drehachse schwenkbar gelagert. Am oberen Ende der Schwinge ist wiederum um eine dritte Drehachse der Arm schwenkbar gelagert, wobei die zweite und dritte Achse parallel zu einander angeordnet sind. Dieser trägt endseitig die Roboterhand mit ihren vorzugsweise drei Drehachsen.

Die JP H01 149285 U offenbart einen solchen Roboterarm, der an einem Boden oder an einer Decke montiert werden kann.

Die JP H01 146676 A beschreibt einen gattungsgemäßen Roboterarm, bei dem ein Glied eines SCARA-Arms relativ zu seinem benachbarten Glied wahlweise entweder in einer ersten Richtung oder in einer bezogen auf eine gedachte Montageachse um 180° gedrehten zweiten Richtung montierbar ist.

Aufgabe der Erfindung ist es, einen variabel montierbaren bzw. zusammensetzbaren Roboterarm anzugeben.

Die Aufgabe der Erfindung wird gelöst durch einen Roboterarm, aufweisend mehrere hintereinander, bezüglich Drehachsen relativ zueinander bewegbare Glieder und Motoren zum Bewegen der Glieder, wobei wenigstens eines der Glieder wahlweise in wenigstens zwei Konfigurationen relativ zu seinem benachbarten Glied montierbar ist, wobei das entsprechende Glied relativ zu seinem benachbarten Glied wahlweise entweder in einer ersten Richtung oder in einer bezogen auf eine gedachte Montageachse um 180° gedrehten zweiten Richtung montierbar ist, wobei die gedachte Montageachse orthogonal zu der Drehachse des benachbarten Gliedes ist, und wobei eines der Glieder als eine Schwinge und ein weiteres der Glieder als ein Arm ausgebildet ist, und eine der Drehachsen eine Schwingenachse, bezüglich derer die Schwinge an einem seiner Enden schwenkbar gelagert ist, und eine weitere der Drehachsen eine dazu parallele Armachse ist, bezüglich derer der Arm schwenkbar relativ zum anderen Ende der Schwinge gelagert ist, wobei das Glied, das in wenigstens zwei Konfigurationen wahlweise relativ zu seinem benachbarten Glied montierbar ist, die Schwinge ist, welche mit seinem dem Arm abgewandten Ende wahlweise in wenigstens zwei Konfigurationen relativ zu einem Karussell montierbar ist, an dem die Schwinge relativ zur Schwingenachse schwenkbar angeordnet ist.

Aufgrund der erfindungsgemäßen Möglichkeit wenigstens eines der Glieder wahlweise in wenigstens zwei Konfigurationen relativ zu seinem benachbarten Glied zu montieren, kann der Arbeitsraum des Roboterarms, bezüglich den der Roboterarm verfahrbar ist, relativ einfach an die gewünschte Applikation angepasst werden.

Das entsprechende Glied ist lösbar relativ zu seinem benachbarten Glied in unterschiedliche Richtung montierbar. So ist es möglich, den erfindungsgemäßen Roboterarm vor Ort mechanisch neu zu konfigurieren bzw. der Anwendung entsprechend zusammenzusetzen.

Das entsprechende Glied ist relativ zu seinem benachbarten Glied wahlweise entweder in eine erste Richtung oder in eine auf eine Montageachse bezogene um 180° gedrehte zweite Richtung montierbar, wobei die Montageachse rechtwinklig zu der Drehachse des benachbarten Gliedes ist.

Der erfindungsgemäße Roboterarm ist Teil eines Knick-Arm Roboters. Eines der Glieder ist als eine Schwinge und ein weiteres der Glieder als ein Arm ausgebildet. Eine der Drehachsen stellt eine Schwingenachse dar, bezüglich derer die Schwinge an einem seiner Enden schwenkbar gelagert ist, und eine weitere der Drehachsen ist eine Armachse, bezüglich derer der Arm schwenkbar relativ zum anderen Ende der Schwinge gelagert ist, wobei die Schwingenachse und die Armachse parallel zueinander verlaufen. Der Roboterarm kann auch ein Karussell aufweisen, welches relativ zu einer ersten Drehachse bezüglich eines Gestells drehbar gelagert ist. An dem Karussell kann die Schwinge bezüglich ihrer Schwingenachse, die in diesem Fall dann eine zweite Drehachse ist, schwenkbar gelagert sein. Die Armachse stellt dann eine dritte Drehachse dar.

Bisweilen optimieren Roboterhersteller den Arbeitsbereich der dritten Drehachse, sodass der Arbeitsraum des Roboterarms relativ derart ergiebig genutzt werden kann, dass ein Hauptarbeitsbereich und ein Nebenarbeitsbereich des Arbeitsraums definiert werden kann. Der Nebenarbeitsbereich des Arbeitsraums, der bezogen auf die dritte Drehachse auf der anderen Seite des Arms liegt, wird dadurch jedoch eingeschränkt.

Bei der Verwendung des Roboterarms an einer Decke (Deckenmontage) ist jedoch der sogenannte Überkopfbereich des Roboterarms von besonderem Nutzen, da andernfalls entweder die Schwinge dem Bauteil sehr nahe kommt oder die Reichweite wegen der Subtraktion eines üblicherweise vorhandenen Offsets der zweiten Drehachse von der ersten Drehachse eingeschränkt ist.

Bei der Verwendung als Kompaktroboter kann es von besonderem Nutzen sein, wenn man in dem Haupt- und Nebenarbeitsbereich des Arbeitsraumes bzw. "vorne" oder "hinten" arbeiten kann, weil man so zwei alternative Reichweitentiefen zur Verfügung hat. Diese unterscheiden sich um den doppelten Offset der ersten Drehachse von der zweiten Drehachse. Dieses Vorgehen ist zwar mit einer symmetrischen dritten Drehachse auch möglich, dieser leidet aber durch die Störkonturen der ersten Drehachse im rückwärtigen Status in besonderem Maße.

Bei dem Glied, das in wenigstens zwei Konfigurationen wahlweise relativ zu seinem benachbarten Glied montierbar ist, handelt es sich um die Schwinge, welche insbesondere mit seinem dem Arm abgewandten Ende wahlweise in wenigstens zwei Konfigurationen relativ zu einem Karussell montierbar ist, an dem die Schwinge relativ zur Schwingenachse schwenkbar angeordnet ist. Durch diese Montagemöglichkeit lässt sich der gegebenenfalls asymmetrisch optimierte Arbeitsraum nach beiden Richtungen nutzen.

Nach einer bevorzugten Ausführungsform des erfindungsgemäßen Roboterarms handelt es sich bei dem Glied, das in wenigstens zwei Konfigurationen relativ zu seinem benachbarten Glied montierbar ist, um den Arm, und das benachbarte Glied ist die Schwinge. Insbesondere wenn der Arm wahlweise bezogen auf die Montageachse, um 180° gedreht relativ zur Schwinge montiert werden kann, schafft die erfindungsgemäße Montagemöglichkeit die Möglichkeit, den gegebenenfalls asymmetrisch optimierten Arbeitsraum nach beiden Richtungen zu nutzen.

Der erfindungsgemäße Roboterarm kann eine erste Befestigungsvorrichtung aufweisen, welche schwenkbar relativ zur Armachse an der Schwinge gelagert ist und an der der Arm wahlweise in die wenigstens zwei Konfigurationen relativ zur Schwinge montierbar ist.

Die Möglichkeit der wahlweisen bezogen auf die Montageachse, um 180° gedrehten Montage des Arms kann dann relativ einfach realisiert werden, wenn nach einer Variante des erfindungsgemäßen Roboterarms dessen erste Befestigungsvorrichtung derart ausgeführt ist, dass sie eine radial zur Armachse und zu einer Längsachse des Arms in einem Winkel α=45° angeordnete Montagefläche aufweist, so dass der Arm darauf um eine zur Montagefläche rechtwinklig ausgerichteten gedachten Achse um 180° gedreht montierbar ist. Hierbei entspricht die gedachte Achse der beschriebenen Montageachse.

Weitere Glieder des erfindungsgemäßen Roboterarms können als eine Roboterhand ausgebildet sein, die endseitig eine zweite Befestigungsvorrichtung zum Befestigen eines Endeffektors aufweist und die an dem der Schwinge abgewandten Ende des Arms befestigt ist. Die Roboterhand umfasst vorzugsweise drei Drehachsen, insbesondere eine vierte Drehachse, eine fünfte Drehachse und eine sechste Drehachse. Die Längsachse des Arms kann dann auch die vierte Drehachse sein.

Die der Roboterhand zugeordneten Motoren können vorzugsweise im und/oder an dem Ende des Arms angeordnet sein, das der Schwinge zugewandt ist. Der erfindungsgemäße Roboterarm kann dann eine mit den Motoren der Roboterhand verbundene elektrische Leitung aufweisen.

Insbesondere wenn der Arm wahlweise in die wenigstens zwei Konfigurationen relativ zur Schwinge und insbesondere entweder in der einen Richtung oder um 180° bezogen auf die Montageachse gedreht montierbar ist, kann die mit den Motoren der Roboterhand verbundene elektrische Leitung mittig einen zum Befestigen des Arms an der ersten Befestigungsvorrichtung vorgesehenen Montage-Flansch mittig durchdringen. Der Arm des erfindungsgemäßen Roboterarms kann aber auch zwei alternative Zuführungen für die elektrische Leitung aufweisen, durch die wahlweise je nach Montage des Arms die elektrische Leitung zum Anschluss an die Motoren der Roboterhand geführt ist. Insbesondere können die Zuführungen gegenüberliegend an den Seitenflächen des Arms insbesondere im Bereich der Motoren der Roboterhand angeordnet sein.

Ein Ausführungsbeispiel der Erfindung ist exemplarisch in den beigefügten schematischen Zeichnungen dargestellt. Es zeigen:
- Figuren 1 bis 3: einen Roboterarm, und
- Fig. 4: einen Ausschnitt des Roboterarms.

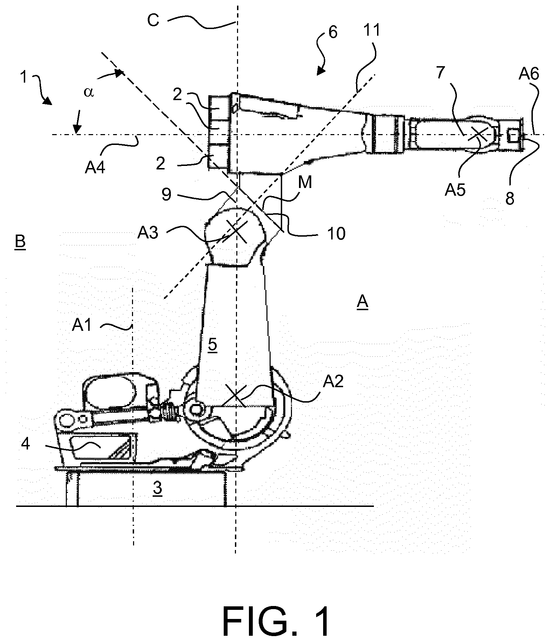

Die Figuren 1 bis 3 zeigt einen Roboterarm 1, der mehrere, nacheinander angeordnete und mittels Gelenke verbundene Glieder umfasst.

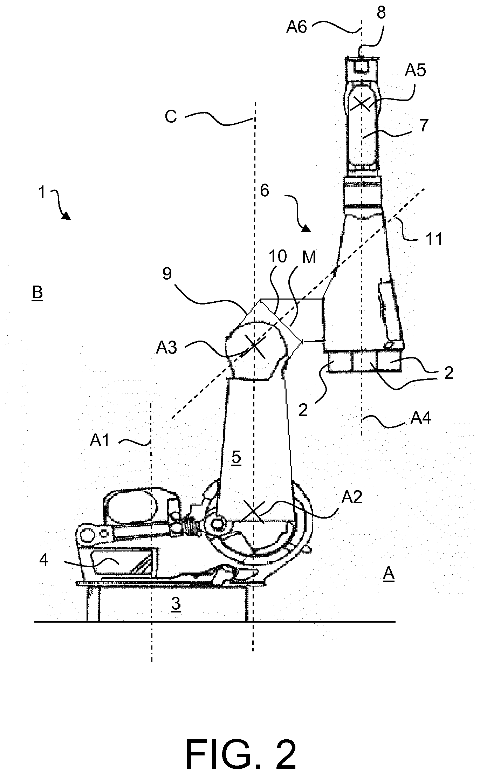

Bei den Gliedern handelt es sich im Falle des vorliegenden Ausführungsbeispiels insbesondere um ein ortsfestes oder bewegliches Gestell 3 und ein relativ zum Gestell 3 um eine erste Drehachse A1 drehbar gelagertes Karussell 4. Im Falle des in den Figuren 1 und 2 gezeigten Ausführungsbeispiels ist das Gestell 3 am Boden befestigt.

Weitere Glieder des Roboterarms 1 sind im Falle des vorliegenden Ausführungsbeispiels eine Schwinge 5, ein Arm 6 und eine vorzugsweise mehrachsige Roboterhand 7 mit einer z.B. als Flansch 8 ausgeführten Befestigungsvorrichtung zum Befestigen eines nicht näher dargestellten Endeffektors. Die Schwinge 5 ist am unteren Ende z.B. an einem nicht näher dargestellten Schwingenlagerkopf auf dem Karussell 4 um eine zweite Drehachse A2 schwenkbar gelagert. Am oberen Ende der Schwinge 5 ist wiederum um eine dritte Drehachse A3 der Arm 6 schwenkbar gelagert. Dieser trägt endseitig die Roboterhand 7 mit ihren vorzugsweise drei Drehachsen, nämlich einer vierten Drehachse A4, einer Drehachse Achse A5 und einer sechsten Drehachse A6. In der in der Fig. 1 gezeigten Stellung des Roboterarms 1 fallen die vierte Drehachse A4 und die sechste Drehachse A6 aufeinander. Des Weiteren sind die zweite Drehachse A2 und die dritte Drehachse A3 parallel zu einander angeordnet.

Der Roboterarm 1 ist insbesondere Teil eines Knickarm-Roboters, der neben dem Roboterarm 1 eine nicht näher dargestellte Steuervorrichtung aufweist, welche in allgemein bekannter Weise z.B. mit elektrischen Antrieben des Knickarm-Roboters verbunden sind. In den Figuren 1 bis 3 sind nur einige der elektrischen Motoren 2 dieser elektrischen Antriebe gezeigt, welche im und/oder am Roboterarm 1 befestigt sind. Die in den Figuren 1 bis 3 gezeigten elektrischen Motoren 2 sind zum Bewegen der Roboterhand 7 vorgesehen. Leistungselektroniken der elektrischen Antriebe sind z.B. innerhalb eines Gehäuses eines nicht näher dargestellten Steuerschranks angeordnet, innerhalb dem z.B. auch die Steuervorrichtung angeordnet ist. Die Leistungselektroniken der elektrischen Antriebe können auch im und/oder am Roboterarm 1 angeordnet sein. Die elektrischen Motoren 2 der Roboterhand 7 sind insbesondere in und/oder an dem Ende des Arms 6 angeordnet, der der Schwinge 5 zugewandt ist.

Im Falle des vorliegenden Ausführungsbeispiels ist der Roboterarm 1 derart ausgeführt, dass wenigstens eines seiner Glieder 3 bis 7 in wenigstens zwei verschiedenen Konfigurationen relativ zu seinem benachbarten Glied 3-7 montiert werden kann. Insbesondere kann dieses Glied für die zwei verschiedenen Konfigurationen entweder in eine erste Richtung oder in eine bezogen auf eine gedachte Montageachse 11 um 180° gedrehte zweite Richtung relativ zu seinem benachbarten Glied 3-7 montiert werden. Dies ist insbesondere für die Schwinge 5 und/oder den Arm 6 vorgesehen. Hierbei ist die gedachte Montageachse 11 orthogonal zu der jeweiligen Drehachse A2 der Schwinge 5 bzw. Drehachse A3 des Arms 6 angeordnet.

Um z.B. zu erreichen, dass der Arm 6 relativ zur Schwinge 5 wahlweise in zwei verschiedenen Konfigurationen, insbesondere wahlweise entweder in die erste Richtung oder in die bezogen auf die Montageachse 11 um 180° gedrehte zweite Richtung montierbar ist, umfasst der Roboterarm 1 im Falle des vorliegenden Ausführungsbeispiels eine Befestigungsvorrichtung 9, welche schwenkbar bezüglich der dritten Drehachse A3 am entsprechenden Ende der Schwinge 5 angeordnet ist. Der Arm 6 wiederum umfasst an seinem der Schwinge 5 zugewandten Ende eine Gegenbefestigungsvorrichtung 10, mittels derer der Arm 6 insbesondere lösbar an der Befestigungsvorrichtung 9 montierbar ist. Die Befestigungsvorrichtung 9 und die Gegenbefestigungsvorrichtung 10 sind derart ausgeführt, dass der Arm 6 wahlweise in zwei verschiedenen Konfigurationen an der Befestigungsvorrichtung 9 montierbar ist. In den beiden Konfigurationen ist der Arm 6 bezüglich der Befestigungsvorrichtung 10 und somit bezüglich der Schwinge 5 wahlweise entweder in die erste Richtung oder in die bezogen auf die Montageachse 11 um 180° gedrehte zweite Richtung insbesondere lösbar montierbar. In der in der Fig. 1 gezeigten Darstellung ist der Arm 6 in einer seiner Ausrichtungen in der ersten Richtung an der Befestigungsvorrichtung 10 montiert, und in der in der Fig. 2 gezeigten Darstellung ist der Arm 6 in der zu der ersten Richtung bezogen auf die Montageachse 11 um 180° gedrehten zweiten Richtung an der Befestigungsvorrichtung 10 montiert.

Wird z.B. der Arbeitsbereich des Roboterarms 1, also derjenige Bereich, den der Arm 2 im Betrieb z.B. mit seinem Flansch 8 oder einem sogenannten Tool Center Point anfahren kann, in einen Hauptarbeitsbereich A und einen Teilarbeitsbereich B unterteilt, welche durch eine Ebene C geteilt sind, wobei die Ebene C3 durch die zweite Drehachse A2 und die dritte Drehachse A3 aufgespannt ist, dann können, je nachdem wie der Arm 6 an der Befestigungsvorrichtung 9 montiert ist, der Hauptarbeitsbereich A und der Teilarbeitsbereich B des Arbeitsraums an die Applikation des den Roboterarm 1 umfassenden Roboters angepasst werden. Insbesondere können die Haupt- und Teilarbeitsbereiche A, B des Arbeitsraumes entsprechend der Montage des Armes 6 an die Schwinge 5 vertauscht werden.

Im Falle des vorliegenden Ausführungsbeispiels gemäß Figur 1 ist der Roboterarm 1 derart ausgeführt, dass die vierte Drehachse A4 bei einer Bodenmontage über der dritten Drehachse A3 verläuft. Dadurch erhält man mehr Raum für die Störkonturen der Schwinge 5 und der ersten Drehachse A1. Dadurch wird der Hauptarbeitsbereich A, wie in der Figur 1 dargestellt, größer.

Im Falle des vorliegenden Ausführungsbeispiels ist die Befestigungsvorrichtung 9 derart ausgeführt, dass sie eine radial zur dritten Drehachse A3 und zur vierten Drehachse A4 in einem Winkel α=45° angeordnete Montagefläche M aufweist, so dass der Arm 6 darauf um die gedachte Montageachse 11 um 180° gedreht montiert werden kann. Der den Roboterarm 1 umfassende Roboter wäre so sogar ohne neue Justage umzubauen und nach einer Software-Konfiguration weiterzubetreiben.

Eine entsprechende bezogen auf die Montageachse 11 um 180° gedrehte, gezeigte Montage des Arms 6 gemäß Figur 2 ermöglicht erfindungsgemäß, dass der Teilarbeitsbereich B dem Hauptarbeitsbereichs A entspricht. D.h. die definierten Haupt- und Teilarbeitsbereiche A und B können umgekehrt werden.

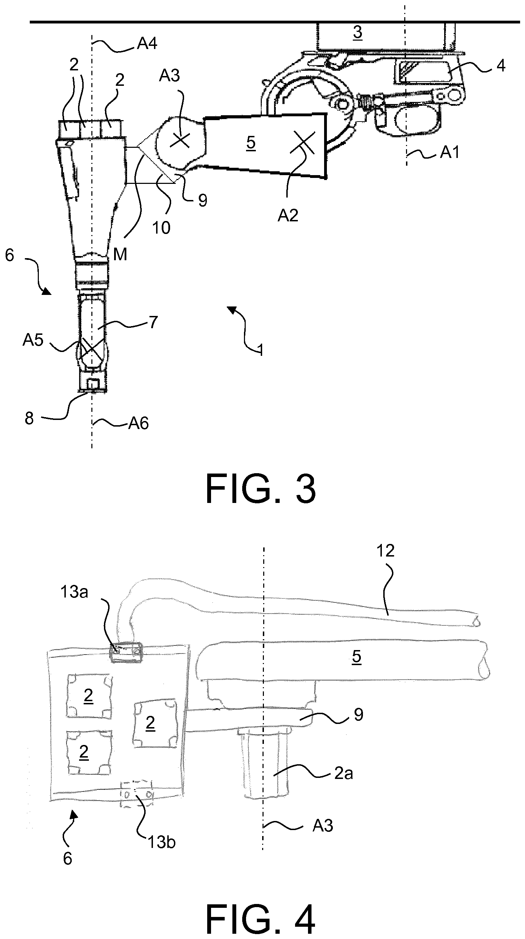

Die Montage des Arms 6 gemäß Figur 2 kann beispielsweise bei einer Montage des Roboterarms 1 an einer Decke vorteilhaft sein. Eine Montage des Roboterarms 1 mit seinem Gestell 3 an einer Decke ist in der Fig. 3 gezeigt.

Um z.B. die der Roboterhand 7 zugeordneten elektrischen Motoren 2 mit elektrischer Energie zu versorgen, umfasst der Roboterarm 1 z.B. eine in der Fig. 4 gezeigte elektrische Leitung 12. Die Fig. 4 zeigt einen Ausschnitt des Roboterarms 1 im Bereich der Schwinge 5 und des Arms 6. Der zum Schwenken der Schwingen 5 bezüglich der dritten Drehachse A3 vorgesehene elektrische Motor ist hierbei mit dem Bezugszeichen 2a versehen.

Für eine verbesserte Kabelführung dieser elektrischen Leitung 12 kann die Befestigungsvorrichtung 9 symmetrisch gestaltet sein. Dies kann z.B. dadurch erreicht werden, indem die elektrische Leitung 12 einen zum Befestigen des Arms 6 an die Befestigungsvorrichtung 9 vorgesehenen Montage-Flansch mittig durchdringt.

Es können aber auch, wie dies in der Fig. 4 gezeigt ist, zwei Zuführungen 13a, 13b für die elektrische Leitung 12 am Arm 6 vorgesehen sein, durch die wahlweise je nach Montage des Arms 6 die elektrische Leitung 12 zum Anschluss an die Motoren 2 der Roboterhand 7 geführt ist. Die beiden Zuführungen 13a, 13b sind gegenüberliegend an den Seitenflächen des Arms 6 insbesondere im Bereich der Motoren 2 der Roboterhand 7 angeordnet.

## Patentansprüche

1. Roboterarm, aufweisend mehrere hintereinander, bezüglich Drehachsen (A1-A6) relativ zueinander bewegbare Glieder (3-7) und Motoren (2, 2a) zum Bewegen der Glieder (3-7), wobei wenigstens eines der Glieder (3-7) wahlweise in wenigstens zwei Konfigurationen relativ zu seinem benachbarten Glied (3-7) montierbar ist, wobei das entsprechende Glied (3-7) relativ zu seinem benachbarten Glied (3-7) wahlweise entweder in einer ersten Richtung oder in einer bezogen auf eine gedachte Montageachse (11) um 180° gedrehten zweiten Richtung montierbar ist, wobei die gedachte Montageachse (11) orthogonal zu der Drehachse des benachbarten Gliedes (3-7) ist, wobei eines der Glieder als eine Schwinge (5) und ein weiteres der Glieder als ein Arm (6) ausgebildet ist, und eine der Drehachsen eine Schwingenachse (A2), bezüglich derer die Schwinge (5) an einem seiner Enden schwenkbar gelagert ist, und eine weitere der Drehachsen eine dazu parallele Armachse (A3) ist, bezüglich derer der Arm (6) schwenkbar relativ zum anderen Ende der Schwinge (5) gelagert ist, **dadurch gekennzeichnet, dass** das Glied, das in wenigstens zwei Konfigurationen wahlweise relativ zu seinem benachbarten Glied (3-7) montierbar ist, die Schwinge (5) ist, welche mit seinem dem Arm (6) abgewandten Ende wahlweise in wenigstens zwei Konfigurationen relativ zu einem Karussell (4) montierbar ist, an dem die Schwinge (5) relativ zur Schwingenachse (A2) schwenkbar angeordnet ist.

2. Roboterarm nach Anspruch 1, bei dem das entsprechende Glied (3-7) lösbar relativ zu seinem benachbarten Glied (3-7) in unterschiedliche Richtung montierbar ist.

3. Roboterarm nach Anspruch 1 oder 2, bei dem das Glied, das in wenigstens zwei Konfigurationen relativ zu seinem benachbarten Glied (3-7) montierbar ist, der Arm (6), und das benachbarte Glied die Schwinge (5) ist.

4. Roboterarm nach einem der Ansprüche 1 bis 3, aufweisend eine erste Befestigungsvorrichtung (9), welche schwenkbar relativ zur Armachse (A3) an der Schwinge (5) gelagert ist und an der der Arm (6) wahlweise in die wenigstens zwei Konfigurationen relativ zur Schwinge (5) montierbar ist.

5. Roboterarm nach Anspruch 4, dessen erste Befestigungsvorrichtung (9) derart ausgeführt, dass sie eine radial zur Armachse (A3) und zu einer Längsachse (A4) des Arms (6) in einem Winkel α=45° angeordnete Montagefläche (M) aufweist, so dass der Arm (6) darauf um die zur Montagefläche rechtwinklig ausgerichteten gedachten Montageachse (11) um 180° gedreht montierbar ist.

6. Roboterarm nach einem der Ansprüche 1 bis 5, bei dem weitere der Glieder als eine Roboterhand (7) ausgebildet sind, die endseitig eine zweite Befestigungsvorrichtung (8) zum Befestigen eines Endeffektors aufweist und die an dem der Schwinge (5) abgewandten Ende des Arms (6) befestigt ist, wobei die der Roboterhand (7) zugeordneten Motoren (2) im und/oder an dem Ende des Arms (6) angeordnet sind, das der Schwinge (5) zugewandt ist.

7. Roboterarm nach Anspruch 6, aufweisend eine mit den Motoren (2) der Roboterhand (7) verbundene elektrische Leitung (12), welche mittig einen zum Befestigen des Arms (6) an der ersten Befestigungsvorrichtung (9) vorgesehenen Montage-Flansch mittig durchdringt.

8. Roboterarm nach Anspruch 6, aufweisend eine mit den Motoren (2) der Roboterhand (7) verbundene elektrische Leitung (12), wobei der Arm (6) zwei Zuführungen (13a, 13b) für die elektrische Leitung (12) aufweist, durch die wahlweise je nach Montage des Arms (6) die elektrische Leitung (12) zum Anschluss an die Motoren (2) der Roboterhand (7) geführt ist.

9. Roboterarm nach Anspruch 8, bei dem die Zuführungen (13a, 13b) gegenüberliegend an den Seitenflächen des Arms (6) insbesondere im Bereich der Motoren (2) der Roboterhand (7) angeordnet sind.

## Claims

1. A robot arm comprising a plurality of members (3-7) movable relative to each other in series with respect to axes of rotation (A1-A6) and motors (2, 2a) for moving the members (3-7), at least one of the members (3-7) being selectively mountable in at least two configurations relative to its adjacent member (3-7), wherein the corresponding member (3-7) can be mounted relative to its adjacent member (3-7) either in a first direction or in a second direction rotated by 180° relative to an imaginary mounting axis (11), wherein the imaginary mounting axis (11) is orthogonal to the axis of rotation of the adjacent member (3-7), wherein one of the members is formed as a rocker (5) and another of the members is formed as an arm (6), and one of the axes of rotation is a rocker axis (A2) with respect to which the rocker (5) is pivotally mounted at one of its ends, and another of the axes of rotation is an arm axis (A3) parallel thereto with respect to which the arm (6) is pivotally mounted relative to the other end of the rocker (5), **characterized in that** the member which is selectively mountable in at least two configurations relative to its adjacent member (3-7) is the rocker (5) which is selectively mountable with its end remote from the arm (6) in at least two configurations relative to a carousel (4) on which the rocker (5) is arranged pivotably relative to the rocker axis (A2).

2. Robot arm according to claim 1, wherein the corresponding member (3-7) is detachably mountable relative to its adjacent member (3-7) in different directions.

3. Robot arm according to claim 1 or 2, wherein the member mountable in at least two configurations relative to its adjacent member (3-7) is the arm (6), and the adjacent member is the rocker (5).

4. Robot arm according to any one of claims 1 to 3, comprising a first mounting device (9) which is pivotably mounted on the rocker (5) relative to the arm axis (A3) and on which the arm (6) can be selectively mounted in the at least two configurations relative to the rocker (5) .

5. Robot arm according to claim 4, the first mounting device (9) of which is designed such that it has a mounting surface (M) arranged radially to the arm axis (A3) and to a longitudinal axis (A4) of the arm (6) at an angle α=45°, so that the arm (6) can be mounted thereon rotated through 180° about the imaginary mounting axis (11) aligned at right angles to the mounting surface.

6. Robot arm according to one of claims 1 to 5, in which further of the members are formed as a robot hand (7), which has a second fastening device (8) at the end for fastening an end effector and which is fastened to the end of the arm (6) facing away from the rocker (5), the motors (2) associated with the robot hand (7) being arranged in and/or at the end of the arm (6) facing the rocker (5).

7. Robot arm according to claim 6, comprising an electrical line (12) connected to the motors (2) of the robot hand (7), which line centrally penetrates a mounting flange provided for fastening the arm (6) to the first mounting device (9).

8. Robot arm according to claim 6, comprising an electrical line (12) connected to the motors (2) of the robot hand (7), the arm (6) having two feeds (13a, 13b) for the electrical line (12), through which the electrical line (12) for connection to the motors (2) of the robot hand (7) is selectively guided depending on the assembly of the arm (6).

9. Robot arm according to claim 8, in which the feeds (13a, 13b) are arranged opposite one another on the side surfaces of the arm (6), in particular in the region of the motors (2) of the robot hand (7).

## Revendications

1. Bras de robot comprenant une pluralité d'éléments (3-7) mobiles les uns par rapport aux autres, les uns derrière les autres, par rapport à des axes de rotation (A1-A6), et des moteurs (2, 2a) pour déplacer les éléments (3-7), au moins l'un des éléments (3-7) pouvant être monté sélectivement dans au moins deux configurations par rapport à son élément adjacent (3-7), **caractérisé en ce que** les moteurs (2, 2a) sont des moteurs à combustion interne, l'élément correspondant (3-7) pouvant être monté par rapport à son élément adjacent (3-7), au choix, soit dans une première direction, soit dans une deuxième direction tournée de 180° par rapport à un axe de montage imaginaire (11), l'axe de montage imaginaire (11) étant orthogonal à l'axe de rotation du membre adjacent (3-7), dans laquelle l'un des éléments est réalisé sous la forme d'une biellette (5) et un autre des éléments est réalisé sous la forme d'un bras (6), et l'un des axes de rotation est un axe de biellette (A2) par rapport auquel la biellette (5) est montée de manière pivotante à l'une de ses extrémités, et un autre des axes de rotation est un axe (A3) de bras parallèle à celui-ci par rapport auquel le bras (6) est monté de manière pivotante par rapport à l'autre extrémité de la biellette (5), **caractérisé en ce que** l'élément qui peut être monté sélectivement dans au moins deux configurations par rapport à son élément adjacent (3-7) est la biellette (5) qui, avec son extrémité opposée au bras (6), peut être monté sélectivement dans au moins deux configurations par rapport à un carrousel (4) sur lequel la biellette (5) est disposé de manière à pouvoir pivoter par rapport à l'axe de biellette (A2).

2. Bras de robot selon la revendication 1, dans lequel l'élément correspondant (3-7) peut être monté de manière amovible par rapport à son élément adjacent (3-7) dans différentes directions.

3. Bras de robot selon la revendication 1 ou 2, dans lequel l'élément qui peut être monté dans au moins deux configurations par rapport à son élément adjacent (3-7) est le bras (6), et l'élément adjacent est la biellette (5).

4. Bras de robot selon l'une des revendications 1 à 3, comprenant un premier dispositif de fixation (9) qui est monté pivotant sur la biellette (5) par rapport à l'axe (A3) du bras et sur lequel le bras (6) peut être monté sélectivement dans les au moins deux configurations par rapport à la biellette (5).

5. Bras de robot selon la revendication 4, dont le premier dispositif de fixation (9) est réalisé de telle sorte qu'il présente une surface de montage (M) disposée radialement par rapport à l'axe (A3) du bras et par rapport à un axe longitudinal (A4) du bras (6) selon un angle α=45°, de sorte que le bras (6) peut être monté sur celle-ci en étant tourné de 180° autour de l'axe de montage imaginaire (11) orienté perpendiculairement à la surface de montage.

6. Bras de robot selon l'une des revendications 1 à 5, dans lequel d'autres des membres sont réalisés sous la forme d'une main de robot (7) qui présente à son extrémité un deuxième dispositif de fixation (8) pour la fixation d'un effecteur d'extrémité et qui est fixé à l'extrémité du bras (6) opposée à la biellette (5), les moteurs (2) associés à la main de robot (7) étant disposés dans et/ou à l'extrémité du bras (6) qui est tournée vers la biellette (5).

7. Bras de robot selon la revendication 6, présentant un câble électrique (12) relié aux moteurs (2) de la main de robot (7), qui traverse centralement une bride de montage prévue pour fixer le bras (6) au premier dispositif de fixation (9).

8. Bras de robot selon la revendication 6, présentant un câble électrique (12) relié aux moteurs (2) de la main de robot (7), le bras (6) présentant deux entrées (13a, 13b) pour le câble électrique (12), à travers lesquelles le câble électrique (12) est guidé sélectivement selon le montage du bras (6) pour le raccordement aux moteurs (2) de la main de robot (7).

9. Bras de robot selon la revendication 8, dans lequel les entrées (13a, 13b) sont disposées de manière opposée sur les surfaces latérales du bras (6), en particulier dans la zone des moteurs (2) de la main de robot (7).
